# EUROPEAN PATENT APPLICATION

(11) **EP 4 660 811 A1**
(43) Date of publication of application: **10.12.2025**
(21) Application number: 23926115.9
(22) Date of filing: 26.12.2023
(51) Int. Cl.: G06F 11/14

(54) **DATA DISASTER RECOVERY METHOD, APPARATUS AND SYSTEM, NODE DEVICE, AND STANDBY NODE DEVICE**

(30) Priority: 09.03.2023 CN 202310224449; 16.05.2023 CN 202310551521
(71) Applicant: Huawei Cloud Computing Technologies Co., Ltd., Guiyang, Guizhou 550025 (CN)
(72) Inventor: LI, Jian, Guiyang, Guizhou 550025 (CN); ZHAO, Pingzhong, Guiyang, Guizhou 550025 (CN); LIU, Hailong, Guiyang, Guizhou 550025 (CN)
(74) Representative: Goddar, Heinz J.
(86) International application number: PCT/CN2023/142044
(87) International publication number: WO 2024/183421

(57) **Abstract**

This application discloses a data disaster recovery method, apparatus, and system, a node device, and a standby node device, and relates to the field of data storage. A database disaster recovery system includes a primary cluster and a disaster recovery cluster. Data synchronization is periodically performed between the primary cluster and the disaster recovery cluster. In a data synchronization process, a node device in the primary cluster may determine, based on a page modification information bitmap, a to-be-synchronized page on which data modification is performed in the node device, replicate data of the to-be-synchronized page, and send a page address of the to-be-synchronized page and the data of the to-be-synchronized page to a standby node device corresponding to the node device, where the standby node device is a device in the disaster recovery cluster. The node device in the primary cluster synchronizes only data of a page on which data modification is performed to the standby node device in the disaster recovery cluster, so that an amount of data transmitted between the primary cluster and the disaster recovery cluster can be reduced, network resources occupied for data transmission can be reduced, and an RTO can be effectively shortened.

## Description

### CROSS-REFERENCE TO RELATED APPLICATIONS

This application claims priorities to Chinese Patent Application No. 202310224449.5, filed with the China National Intellectual Property Administration on March 9, 2023 and entitled "DATA DISASTER RECOVERY METHOD", and to Chinese Patent Application No. 202310551521.5, filed with the China National Intellectual Property Administration on May 16, 2023 and entitled "DATA DISASTER RECOVERY METHOD, APPARATUS, AND SYSTEM, NODE DEVICE, AND STANDBY NODE DEVICE", both of which are incorporated herein by reference in their entireties.

### TECHNICAL FIELD

This application relates to the field of data storage technologies, and in particular, to a data disaster recovery method, apparatus, and system, a node device, and a standby node device.

### BACKGROUND

In a database disaster recovery system, two or more database centers with a same function are established in different data centers, and health status monitoring and function switching can be performed between the two or more database centers. When a database center stops working due to an accident, the database disaster recovery system can switch to another database center, and the another database center provides a service. In this way, the database disaster recovery system can continue to work properly. The database center may also be referred to as a data storage cluster. One of at least two database centers may be used as a primary cluster, and the rest of the at least two database centers may be used as a disaster recovery cluster. The primary cluster can provide a read/write service, and the disaster recovery cluster can provide a read service.

In the database disaster recovery system, data synchronization is periodically performed between the primary cluster and the disaster recovery cluster. When data synchronization is performed between the primary cluster and the disaster recovery cluster, a write ahead log (write ahead log, WAL)-based stream replication manner is usually used. In this manner, the primary cluster synchronizes a generated WAL log to the disaster recovery cluster, where the WAL log is generated and sent in real time.

As an amount of data that needs to be stored in a service in an actual application scenario increases, a large quantity of WAL logs are generated. When data synchronization is performed in the WAL log-based stream replication manner, a large amount of data needs to be transmitted between the primary cluster and the disaster recovery cluster. This not only occupies a large quantity of network resources, but also causes a long recovery time object (recovery time object, RTO).

### SUMMARY

Embodiments of this application provide a data disaster recovery method, apparatus, and system, a node device, and a standby node device, to save network resources occupied for data transmission and effectively shorten an RTO.

According to a first aspect, an embodiment of this application provides a data disaster recovery method. The method may be applied to a database disaster recovery system. The database disaster recovery system includes a primary cluster and a disaster recovery cluster, and data synchronization can be periodically performed between the primary cluster and the disaster recovery cluster. In a data synchronization process, a node device in the primary cluster determines, based on a page modification information bitmap of the node device, a to-be-synchronized page on which data modification is performed in the node device, and replicates data of the to-be-synchronized page. The page modification information bitmap indicates a page address of a page on which data modification is performed in the node device.

The node device sends a page address of the to-be-synchronized page and the data of the to-be-synchronized page to a standby node device corresponding to the node device. The standby node device stores the data of the to-be-synchronized page into an external memory of the standby node device based on the page address of the to-be-synchronized page. The standby node device is a device in the disaster recovery cluster.

In embodiments of this application, the node device in the primary cluster synchronizes only data of the page on which data modification is performed to the standby node device in the disaster recovery cluster, so that an amount of data transmitted between the primary cluster and the disaster recovery cluster can be reduced, and network resources occupied for data transmission can be reduced. In addition, the standby node device in the disaster recovery cluster may directly store backup data sent by the node device in the primary cluster, and does not need to store the backup data by replaying a log, so that synchronization can be quickly completed, and an RTO can be effectively shortened.

In a possible implementation, the page modification information bitmap of the node device includes a plurality of indication bits, and each indication bit corresponds to one page that stores data. When a data write operation is received, the node device may determine a target page corresponding to the data write operation, and set, in the page modification information bitmap, an indication bit corresponding to the target page to a page modified state, so that the node device can quickly determine the page on which data modification is performed while performing data synchronization.

In a possible implementation, if a data deletion operation is received, the node device may delete, after waiting for specified duration, data that the data deletion operation indicates to delete.

The node device performs the data deletion operation after waiting for the specified duration. This can ensure that a data query operation in the disaster recovery cluster can be properly performed, and avoid a data query failure caused by querying for, in the disaster recovery cluster, specific data that has already been deleted by the node device in the primary cluster.

In a possible implementation, after the standby node device stores the data of the to-be-synchronized page into the external memory of the standby node device, if it is determined that original data at the page address of the to-be-synchronized page is stored in a memory of the standby node device, the standby node device deletes the original data that is at the page address of the to-be-synchronized page and that is in the memory, and re-reads the data at the page address of the to-be-synchronized page in the external memory into the memory of the standby node device. The original data is read into the memory from the page address of the to-be-synchronized page in the external memory before current data synchronization is performed.

Because the original data is inconsistent with the data stored at the page address of the to-be-synchronized page in the node device of the primary cluster, the original data is not suitable for being output as a query result. The data stored in the external memory of the standby node device is consistent with the data stored at the page address of the to-be-synchronized page in the node device in the primary cluster. In this case, the standby node device deletes the original data that is at the page address of the to-be-synchronized page and that is in the memory, and re-reads the data at the page address of the to-be-synchronized page in the external memory into the memory of the standby node device, so that a user can find new data obtained after data synchronization, and the new data obtained after data synchronization can take effect in a timely manner.

In a possible implementation, the node device may further generate a global consistency snapshot in the data synchronization process, add a minimum transaction number in the global consistency snapshot and a log sequence number of a latest log on the node device to a control file, and send the control file to the standby node device. The minimum transaction number is a transaction number of an operation transaction that is first executed among operation transactions that are being executed by the primary cluster during current data synchronization. The standby node device performs a query operation based on the global consistency snapshot and the control file that are received in the data synchronization process.

In a possible implementation, the standby node device obtains a snapshot for query when receiving the query operation, where the snapshot for query is a global consistency snapshot received in a last data synchronization process before a moment at which the query operation is received. In a process of performing the query operation, the standby node device obtains a log sequence number of a to-be-queried page, where the log sequence number of the to-be-queried page is a log sequence number of a latest log corresponding to the to-be-queried page. The standby node device obtains a minimum transaction number in a current control file, where the current control file is a control file received in a last data synchronization process before a current moment. If the log sequence number of the to-be-queried page is greater than a log sequence number in the snapshot for query, and a minimum transaction number in the snapshot for query is less than the minimum transaction number in the current control file, error prompt information is output.

If the log sequence number of the to-be-queried page is greater than the log sequence number in the snapshot for query, it indicates that the to-be-queried page has been modified after the data synchronization corresponding to the snapshot for query. If the minimum transaction number in the snapshot for query is less than the minimum transaction number in the current control file, it indicates that after receiving the snapshot for query, the standby node device performs data synchronization for a second time, receives a new control file and a new global consistency snapshot, and may determine that the to-be-queried page is modified during the secon-time data synchronization. In this case, the standby node device performs a query operation based on the snapshot for query, and determines visibility of each piece of data, which causes a query error. To avoid finding incorrect data obtained through query, the standby node device may output error prompt information.

In a possible implementation, the global consistency snapshot further includes a first transaction commit number. The first transaction commit number is a transaction commit number of a last committed operation transaction in the primary cluster during the current data synchronization. At least one piece of data is stored on the to-be-queried page.

If the log sequence number of the to-be-queried page is less than or equal to the log sequence number in the snapshot for query, or the minimum transaction number in the snapshot for query is greater than or equal to the minimum transaction number in the current control file, the standby node device obtains a second transaction commit number of each piece of data on the to-be-queried page. A second transaction commit number of any piece of data is a transaction commit number of an operation transaction corresponding to the data. The standby node device obtains the first transaction commit number in the snapshot for query, where the first transaction commit number is a transaction commit number of a last committed operation transaction in the primary cluster when the snapshot for query is generated. The standby node device outputs data whose second transaction commit number is less than the first transaction commit number in the snapshot for query.

For any piece of data, if a second transaction commit number of the data is greater than or equal to the first transaction commit number in the snapshot for query, it indicates that commit time of a task for modifying the data is later than commit time of a last operation transaction in the primary cluster during last data synchronization before the query operation is performed. In other words, the commit time of the task for modifying the data may be after time at which the query operation starts to be performed. Therefore, the data is invisible when the current query operation is performed, and the standby node device may not output the data; otherwise, it is considered that the data is visible when the current query operation is performed, and the standby node device may output the data, to ensure data query consistency between the primary cluster and the disaster recovery cluster.

The minimum transaction number, the transaction commit number, and the log sequence number can be used to avoid finding incorrect data in the disaster recovery cluster when a data query operation is performed, ensure data query consistency between the primary cluster and the disaster recovery cluster, and improve correctness of data queried in the disaster recovery cluster.

According to a second aspect, an embodiment of this application provides a data disaster recovery method. The method may be performed by any node device in a primary cluster of a database disaster recovery system. In a data synchronization process, the node device determines, based on a page modification information bitmap of the node device, a to-be-synchronized page on which data modification is performed in the node device, where the page modification information bitmap indicates a page address of a page on which data modification is performed in the node device. The node device replicates data of the to-be-synchronized page, and sends a page address of the to-be-synchronized page and the data of the to-be-synchronized page to a standby node device corresponding to the node device, where the standby node device is a device in the disaster recovery cluster.

In a possible implementation, the page modification information bitmap includes a plurality of indication bits, and each indication bit corresponds to one page that stores data. When a data write operation is received, the node device determines a target page corresponding to the data write operation, and sets, in the page modification information bitmap, an indication bit corresponding to the target page to a page modified state.

In a possible implementation, if a data deletion operation is received, the node device deletes, after waiting for specified duration, data that the data deletion operation indicates to delete.

According to a third aspect, an embodiment of this application provides a data disaster recovery method. The method may be performed by any standby node device in a disaster recovery cluster of a database disaster recovery system. In a data synchronization process, the standby node device receives a page address of a to-be-synchronized page and data of the to-be-synchronized page that are sent by a node device corresponding to the standby node device, and stores the data of the to-be-synchronized page into an external memory of the standby node device based on the page address of the to-be-synchronized page. The node device is a device in a primary cluster, and the to-be-synchronized page is a page on which data modification is performed and that is determined based on a page modification information bitmap of the node device.

In a possible implementation, after the standby node device stores the data of the to-be-synchronized page into the external memory of the standby node device, if it is determined that original data at the page address of the to-be-synchronized page is stored in a memory of the standby node device, the standby node device deletes the original data that is at the page address of the to-be-synchronized page and that is in the memory, and re-reads the data at the page address of the to-be-synchronized page in the external memory into the memory of the standby node device. The original data is read into the memory from the page address of the to-be-synchronized page in the external memory before current data synchronization is performed.

In a possible implementation, in the data synchronization process, the standby node device may receive and store a global consistency snapshot and a control file that are generated during current data synchronization and that are sent by the corresponding node device.

In a possible implementation, the global consistency snapshot includes a minimum transaction number and a log sequence number of a latest log on the node device, and the minimum transaction number is a transaction number of an operation transaction that is first executed among operation transactions that are being executed by the primary cluster during current data synchronization.

When a query operation is received, the standby node device obtains a snapshot for query, where the snapshot for query is a control file received in a last data synchronization process before a moment at which the query operation is received. The standby node device obtains, in a process of performing the query operation, a log sequence number of a to-be-queried page and a minimum transaction number in a current control file, where the log sequence number of the to-be-queried page is a log sequence number of a latest log corresponding to the to-be-queried page; and the current control file is a control file received in a last data synchronization process before a current moment. If the log sequence number of the to-be-queried page is greater than a log sequence number in the snapshot for query, and a minimum transaction number in the snapshot for query is less than the minimum transaction number in the current control file, the standby node device outputs error prompt information.

In a possible implementation, at least one piece of data is stored on the to-be-queried page. If the log sequence number of the to-be-queried page is less than or equal to the log sequence number in the snapshot for query, or the minimum transaction number in the snapshot for query is greater than or equal to the minimum transaction number in the current control file, the standby node device obtains a second transaction commit number of each piece of data on the to-be-queried page and the first transaction commit number in the snapshot for query, where a second transaction commit number of any piece of data is a transaction commit number of an operation transaction corresponding to the any piece of data; and the first transaction commit number is a transaction commit number of a last committed operation transaction in the primary cluster when the snapshot for query is generated. The standby node device outputs data whose second transaction commit number is less than the first transaction commit number in the snapshot for query.

According to a fourth aspect, an embodiment of this application provides a data disaster recovery apparatus, used in any node device in a primary cluster. The primary cluster is located in a database disaster recovery system, and the database disaster recovery system includes the primary cluster and a disaster recovery cluster. The data disaster recovery apparatus may include:
a page identification module, configured to: in a data synchronization process, determine, based on a page modification information bitmap of the node device, a to-be-synchronized page on which data modification is performed in the node device, where the page modification information bitmap indicates a page address of a page on which data modification is performed in the node device; and
a data synchronization module, configured to: replicate data of the to-be-synchronized page, and send a page address of the to-be-synchronized page and the data of the to-be-synchronized page to a standby node device corresponding to the node device, where the standby node device is a device in the disaster recovery cluster.

In a possible implementation, the page modification information bitmap includes a plurality of indication bits, and each indication bit corresponds to one page that stores data; and the page identification module may be further configured to:
if a data write operation is received, determine a target page corresponding to the data write operation; and
set, in the page modification information bitmap, an indication bit corresponding to the target page to a page modified state.

In a possible implementation, the data disaster recovery apparatus may further include:
a data deletion module, configured to: when a data deletion operation is received, delete, after waiting for specified duration, data that the data deletion operation indicates to delete.

According to a fifth aspect, an embodiment of this application provides a data disaster recovery apparatus, used in any standby node device in a disaster recovery cluster, where the disaster recovery cluster is located in a database disaster recovery system, and the database disaster recovery system includes a primary cluster and the disaster recovery cluster; and the data disaster recovery apparatus includes:
a data receiving module, configured to receive, in a data synchronization process, a page address of a to-be-synchronized page and data of the to-be-synchronized page that are sent by a node device corresponding to the standby node device, where the node device is a device in the primary cluster; and the to-be-synchronized page is a page on which data modification is performed and that is determined based on a page modification information bitmap of the node device; and
a data processing module, configured to store the data of the to-be-synchronized page into an external memory of the standby node device based on the page address of the to-be-synchronized page.

In a possible implementation, the data processing module may be further configured to:
if it is determined that original data at the page address of the to-be-synchronized page is stored in a memory of the standby node device, delete the original data that is at the page address of the to-be-synchronized page and that is in the memory, where the original data is read into the memory from the page address of the to-be-synchronized page in the external memory before current data synchronization is performed; and
re-read the data at the page address of the to-be-synchronized page in the external memory into the memory of the standby node device.

In a possible implementation, the data receiving module may be further configured to:
receive and store, in the data synchronization process, a global consistency snapshot and a control file that are generated during current data synchronization and that are sent by the node device corresponding to the standby node device.

In a possible implementation, the global consistency snapshot includes a minimum transaction number and a log sequence number of a latest log on the node device, and the minimum transaction number is a transaction number of an operation transaction that is first executed among operation transactions that are being executed by the primary cluster during current data synchronization. The data disaster recovery apparatus may further include a data query module. The data query module is configured to:
if a query operation is received, obtain a snapshot for query, where the snapshot for query is a control file received in a last data synchronization process before a moment at which the query operation is received;
in a process of performing the query operation, obtain a log sequence number of a to-be-queried page, where the log sequence number of the to-be-queried page is a log sequence number of a latest log corresponding to the to-be-queried page;
obtain a minimum transaction number in a current control file, where the current control file is a control file received in a last data synchronization process before a current moment; and
if the log sequence number of the to-be-queried page is greater than a log sequence number in the snapshot for query, and a minimum transaction number in the snapshot for query is less than the minimum transaction number in the current control file, output error prompt information.

In a possible implementation, at least one piece of data is stored on the to-be-queried page. The data query module is further configured to:
if the log sequence number of the to-be-queried page is less than or equal to the log sequence number in the snapshot for query, or the minimum transaction number in the snapshot for query is greater than or equal to the minimum transaction number in the current control file, obtain a second transaction commit number of each piece of data on the to-be-queried page, where a second transaction commit number of any piece of data is a transaction commit number of an operation transaction corresponding to the any piece of data;
obtain a first transaction commit number in the snapshot for query, where the first transaction commit number is a transaction commit number of a last committed operation transaction in the primary cluster when the snapshot for query is generated; and
output data whose second transaction commit number is less than the first transaction commit number in the snapshot for query.

According to a sixth aspect, an embodiment of this application provides a node device, including a memory and a processor. The memory stores a computer program, and the processor is configured to: read and execute the computer program stored in the memory, so that any method provided in the first aspect is performed.

According to a seventh aspect, an embodiment of this application provides a standby node device, including a memory and a processor. The memory stores a computer program, and the processor is configured to: read and execute the computer program stored in the memory, so that any method provided in the second aspect is performed.

According to an eighth aspect, an embodiment of this application provides a primary cluster, including at least one node device. The node device may be the node device provided in the fifth aspect.

According to a ninth aspect, an embodiment of this application provides a disaster recovery cluster, including at least one standby node device. The standby node device may be the standby node device provided in the sixth aspect.

According to a tenth aspect, an embodiment of this application provides a database disaster recovery system, including the primary cluster provided in the seventh aspect and the disaster recovery cluster provided in the eighth aspect.

According to an eleventh aspect, an embodiment of this application provides a computer-readable storage medium. The computer-readable storage medium stores computer-executable instructions, and the computer-executable instructions are used to enable a computer to perform any method provided in the first aspect.

According to a twelfth aspect, an embodiment of this application provides a computer-readable storage medium. The computer-readable storage medium stores computer-executable instructions, and the computer-executable instructions are used to enable a computer to perform any method provided in the second aspect.

According to a thirteenth aspect, an embodiment of this application provides a computer program product, including computer-executable instructions. The computer-executable instructions are used to enable a computer to perform any method provided in the first aspect.

According to a fourteenth aspect, an embodiment of this application provides a computer program product, including computer-executable instructions. The computer-executable instructions are used to enable a computer to perform any method provided in the second aspect.

For technical effects that can be achieved in any one of the second aspect to the fourteenth aspect, refer to the foregoing descriptions of the beneficial effects in the first aspect. Details are not described herein again.

### BRIEF DESCRIPTION OF DRAWINGS

FIG. 1 is a diagram of a structure of a database disaster recovery system according to an embodiment of this application;
FIG. 2 is a diagram of interaction of a data disaster recovery method according to an embodiment of this application;
FIG. 3 is a diagram of a page modification information bitmap according to an embodiment of this application;
FIG. 4 is a diagram of an effect of a data synchronization process according to an embodiment of this application;
FIG. 5 is a flowchart of a data query process of a standby node device according to an embodiment of this application;
FIG. 6 is a diagram of a data disaster recovery apparatus according to an embodiment of this application;
FIG. 7 is a diagram of another data disaster recovery apparatus according to an embodiment of this application;
FIG. 8 is a diagram of another data disaster recovery apparatus according to an embodiment of this application;
FIG. 9 is a diagram of another data disaster recovery apparatus according to an embodiment of this application;
FIG. 10 is a diagram of a structure of a node device according to an embodiment of this application; and
FIG. 11 is a diagram of a structure of a standby node device according to an embodiment of this application.

### DESCRIPTION OF EMBODIMENTS

To make objectives, technical solutions, and advantages of embodiments of this application clearer, the following describes embodiments of this application in detail with reference to accompanying drawings. Terms used in implementations of this application are only used to explain specific embodiments of this application, but are not intended to limit this application. It is clear that the described embodiments are merely some rather than all of embodiments of this application. All other embodiments obtained by a person of ordinary skill in the art based on embodiments of this application without creative efforts shall fall within the protection scope of this application.

Before specific solutions provided in embodiments of this application are described, some terms in this application are explained and described, to facilitate understanding by a person skilled in the art, but not to limit the terms in this application.
(1) Disaster recovery is a part of a system high-availability technology. Two or more database centers with a same function are established. Health status monitoring and function switching can be performed between the database centers. When a database center stops working due to an accident (for example, a fire or an earthquake), a system can switch to another database center. In this way, the system can continue to work properly.
(2) RTO: The recovery time object is time required for recovering a service after a disaster occurs and the service is interrupted. For example, if the disaster occurs at 3:00 p.m., and the RTO is 4 hours, a disaster recovery cluster recovers the service before 7:00 p.m.
(3) A recovery point object (recovery point object, RPO) is a requirement on a time point to which data should be recovered after a disaster occurs. The RPO is used to describe an acceptable maximum amount of data loss, and is an indicator for measuring an amount of production data to be lost after a disaster occurs. For example, if the disaster occurs at 3:00 p.m., and the RPO is 2 hours, service data generated two hours before the disaster occurs, that is, between 1:00 p.m. and 3:00 p.m., may be lost.
(4) Stream replication is a database high-availability technology. A primary cluster synchronizes a generated WAL log to the disaster recovery cluster to achieve high data availability. The WAL log is generated and sent in real time.
(5) Peta byte (peta byte, PB) is a unit of a computer storage capacity, where 1 PB=2^{^50} bytes.

In embodiments of this application, "a plurality of" means two or more. In view of this, in embodiments of this application, "a plurality of" may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise specified, ordinal numbers such as "first" and "second" in embodiments of this application are used to distinguish between a plurality of objects, and are not intended to limit a sequence, a time sequence, priorities, or importance of the plurality of objects.

The following describes a data disaster recovery method provided in embodiments of this application with reference to the accompanying drawings.

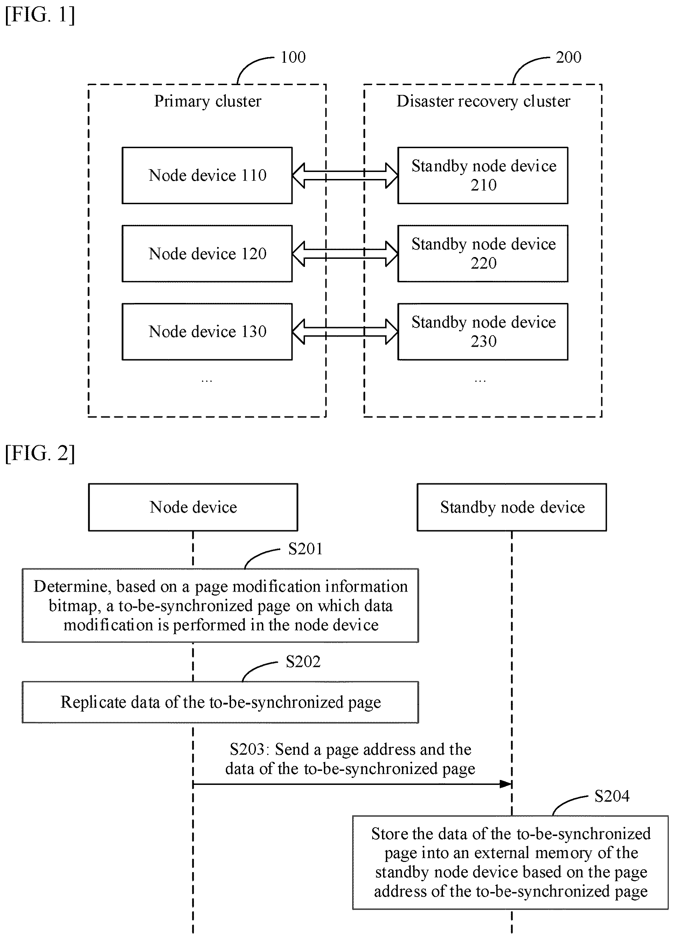

The data disaster recovery method provided in embodiments of this application may be applied to a database disaster recovery system shown in FIG. 1. As shown in FIG. 1, the database disaster recovery system includes a primary cluster 100 and a disaster recovery cluster 200. The primary cluster 100 may be understood as a database, and the disaster recovery cluster 200 may also be understood as a database. The database is a warehouse that organizes, stores, and manages data based on a data structure, and may also be referred to as a data warehouse. In an actual application scenario, a storage capacity of the data warehouse may reach a PB level.

FIG. 1 shows only one disaster recovery cluster 200 as an example. In actual use, a plurality of disaster recovery clusters may alternatively be disposed in the database disaster recovery system. A quantity of disaster recovery clusters in the database disaster recovery system is not limited in this application.

The primary cluster 100 may include one or more node devices. FIG. 1 shows a node device 110, a node device 120, and a node device 130. Corresponding to the primary cluster 100, the disaster recovery cluster 200 may also include one or more standby node devices. FIG. 1 shows a standby node device 210, a standby node device 220, and a standby node device 230. The primary cluster 100 is in a one-to-one correspondence with the node device in the disaster recovery cluster 200. In other words, each node device in the primary cluster 100 has a corresponding standby node device in the disaster recovery cluster 200.

Both the primary cluster 100 and the disaster recovery cluster 200 may provide a service externally. This manner may be referred to as active-active. The primary cluster 100 may provide a read/write service externally, and the disaster recovery cluster 200 may provide a read service externally.

When the primary cluster 100 runs properly, the primary cluster 100 needs to periodically send data backup to the disaster recovery cluster 200 to perform data synchronization, so that when the primary cluster 100 is faulty, the disaster recovery cluster 200 can take over a service of the primary cluster 100.

In some embodiments, if the primary cluster 100 includes a plurality of node devices, there may be one primary node device in the plurality of node devices, and other node devices are used as secondary node devices. During data synchronization, the primary node device may send a data synchronization task to each secondary node device. Each secondary node device receives the data synchronization task sent by the primary node device, and may separately send data backup to a corresponding standby node device in the disaster recovery cluster 200. After sending the data synchronization task to each secondary node device, the primary node device also sends data backup to a standby node device that is in the disaster recovery cluster 200 and that corresponds to the primary node device.

When data synchronization is performed between the primary cluster 100 and the disaster recovery cluster 200, a WAL log-based stream replication manner is usually used. In this manner, data synchronization is implemented between the node device in the primary cluster and the standby node device in the disaster recovery cluster in a WAL log synchronization manner. The node device in the primary cluster may generate a WAL log in real time, and synchronize the WAL log to the standby node device in the disaster recovery cluster in real time, to achieve high data availability.

As an amount of data that needs to be stored in a service in an actual application scenario increases, a large quantity of WAL logs are generated in a data operation process. When data synchronization is performed in the WAL log-based stream replication manner, a large amount of data needs to be transmitted between the primary cluster and the disaster recovery cluster. This not only occupies a large quantity of network resources, but also causes a long RTO.

In view of this, an embodiment of this application provides a data disaster recovery method. A page modification information bitmap is set in each node device in a primary cluster, and a page modification information bitmap in any node device indicates a page address of a page on which data modification is performed in the node device. For any node device in the primary cluster, during data synchronization, the node device may determine, based on the page modification information bitmap, a to-be-synchronized page on which data modification is performed in the node device, replicate data of the to-be-synchronized page, and send a page address of the to-be-synchronized page and the data of the to-be-synchronized page to a standby node device that is in a disaster recovery cluster and that corresponds to the node device. The standby node device may store the data of the to-be-synchronized page into an external memory of the standby node device based on the page address of the to-be-synchronized page. In comparison with data synchronization performed in the WAL log-based stream replication manner, in this embodiment of this application, the primary cluster synchronizes only data of a page on which data modification is performed to the disaster recovery cluster, so that network resources occupied for data transmission can be reduced, and an RTO can be effectively shortened.

Data synchronization is periodically performed between the primary cluster and the disaster recovery cluster. For example, a data synchronization process may be performed between the primary cluster and the disaster recovery cluster every half an hour, to ensure data consistency of the disaster recovery cluster and the primary cluster. FIG. 2 shows an example of an interaction process between a node device and a standby node device in a data synchronization process. The node device may be any node device in a primary cluster, and the standby node device is a standby node device that is in a disaster recovery cluster and that corresponds to the node device. As shown in FIG. 2, the process may include the following steps.

S201: The node device determines, based on a page modification information bitmap, a to-be-synchronized page on which data modification is performed in the node device.

The page modification information bitmap is set in the node device, and the page modification information bitmap indicates a page address of a page on which data modification is performed in storage space of the node device in a time periodicity from last data synchronization to current data synchronization. The page modification information bitmap may include a plurality of indication bits, and each indication bit corresponds to one page that stores data.

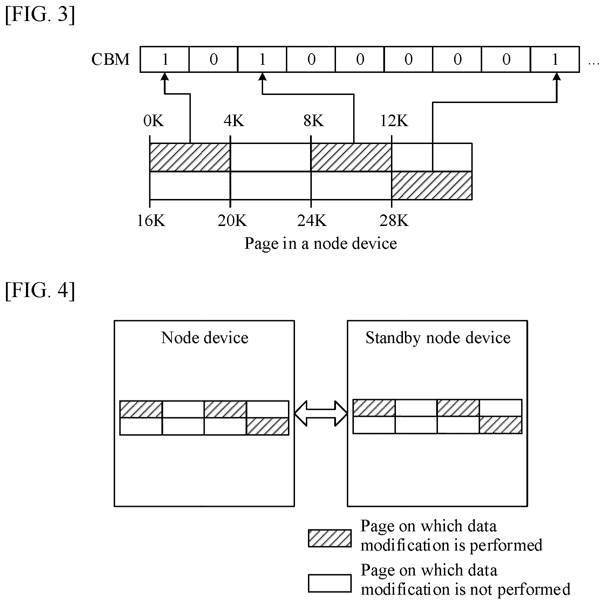

For example, the page modification information bitmap may also be referred to as a page modification hash table (Change block Map, CBM). As shown in FIG. 3, the CBM includes a plurality of indication bits, and each indication bit may occupy one bit (bit). FIG. 3 shows only an example of a part of the CBM. During actual use, the CBM may include more indication bits based on an amount of data stored in the node device. Each indication bit may correspond to two different states: a page unmodified state and a page modified state. For example, a value "0" and a value "1" may respectively represent the page unmodified state and the page modified state, where the value "0" represents the page unmodified state. If a value of an indication bit is "0", it indicates that data modification is not performed on a page corresponding to the indication bit. The value "1" represents the page modified state. If a value of an indication bit is "1", it indicates that data modification is performed on a page corresponding to the indication bit.

A plurality of indication bits in the CBM are in a one-to-one correspondence with a plurality of pages arranged in ascending order of page addresses in the node device. For example, it is assumed that a size of a page is 4K, a first indication bit in the CBM corresponds to an address of a page whose start address is 0K in the node device, and a value "1" in the first indication bit indicates that data modification is performed on the page whose start address is 0K. A second indication bit in the CBM corresponds to an address of a page whose start address is 4K in the node device, and a value "0" in the second indication bit indicates that data modification is not performed on the page whose start address is 4K. A third indication bit in the CBM corresponds to an address of a page whose start address is 8K in the node device, and a value "1" in the third indication bit indicates that data modification is performed on the page whose start address is 8K, and so on.

A value of an indication bit in the CBM changes when data modification is performed on a page corresponding to the indication bit. In some embodiments, when receiving a data write operation, the node device may determine a target page corresponding to the data write operation, and set, in the page modification information bitmap, an indication bit corresponding to the target page to the page modified state. The data write operation may include an operation of modifying original data stored on the page, for example, data write, data modification, and data deletion.

For example, a value of each indication bit in the CBM is "0" at an initial moment. When the node device receives the data write operation, if it is determined that the target page corresponding to the data write operation is a page whose start address is 8K. In this case, a value of the third indication bit in the CBM is changed from "0" to "1", that is, the third indication bit in the CBM is set to the page modified state.

During data synchronization, the node device may read a value of each indication bit in the CBM, and determine, based on the value of each indication bit in the CBM, a page on which data modification is performed in the node device. For example, based on the CBM shown in FIG. 3, the node device may determine that pages on which data modification is performed include the page whose start address is 0K, the page whose start address is 8K, and the page whose start address is 28K. The node device uses the page on which data modification is performed as the to-be-synchronized page.

In some embodiments, the node device may read a value of each indication bit in the CBM by using a data exchange instruction, and set the value of each indication bit in the CBM to "0" while reading the value of each indication bit in the CBM. In some other embodiments, after reading the value of each indication bit in the CBM, the node device may set the value of each indication bit in the CBM to "0" through a bitmap clear operation, so as to prevent the node device from repeatedly backing up data that has been backed up when performing data synchronization next time.

S202: The node device replicates data of the to-be-synchronized page.

S203: The node device sends a page address and the data of the to-be-synchronized page to the standby node device.

The node device may replicate data of each to-be-synchronized page based on a page address of each to-be-synchronized page determined in step S201, and send the page address of the to-be-synchronized page and the data of the to-be-synchronized page to the standby node device that is in the disaster recovery cluster and that corresponds to the node device.

S204: The standby node device stores the data of the to-be-synchronized page into an external memory of the standby node device based on the page address of the to-be-synchronized page.

The standby node device receives the page address of the to-be-synchronized page and the data of the to-be-synchronized page that are sent by the node device, and may store the data of the to-be-synchronized page in storage space that is in the external memory of the standby node device and that corresponds to the page address of the to-be-synchronized page.

FIG. 4 shows an effect obtained after data synchronization is performed between a node device in a primary cluster and a standby node device in a disaster recovery cluster. It can be learned from FIG. 4 that, in a data synchronization process, the standby node device may modify, based on a page on which data modification is performed in the node device, a corresponding page stored in the standby node device, and the standby node device does not need to modify a page on which data modification is not performed in the node device, so that data stored in the standby node device is consistent with data stored in the node device.

The primary cluster in this embodiment of this application synchronizes only data of the page on which data modification is performed to the disaster recovery cluster, so that an amount of data transmitted between the primary cluster and the disaster recovery cluster can be reduced, and network resources occupied for data transmission can be reduced. In addition, the standby node device in the disaster recovery cluster may directly store backup data sent by the node device in the primary cluster, and does not need to store the backup data by replaying a log, so that synchronization can be quickly completed. In addition, a shorter data synchronization periodicity indicates a smaller amount of data that needs to be transmitted during data synchronization, and shorter data synchronization duration. Therefore, the data synchronization periodicity may be appropriately shortened, so that when a disaster or a fault occurs in the primary cluster, the disaster recovery cluster quickly takes over a service, thereby effectively shortening an RTO.

The data disaster recovery method provided in this embodiment of this application may be applied to a data warehouse application scenario with a large amount of data storage. In a data warehouse with a PB-level data storage amount, in a conventional WAL log-based stream replication manner, both an RPO and an RTO need to be more than 12 hours. Based on the data disaster recovery method provided in this embodiment of this application, the RPO can be optimized to 2 hours, and the RTO can be shorter. A shorter RPO and a shorter RTO indicate a more reliable database disaster recovery system. Even if a disaster occurs, a service is not severely affected.

In an optional embodiment, after storing data of a to-be-synchronized page into an external memory of the standby node device, the standby node device may further determine whether a memory of the standby node device stores original data in a page address of the to-be-synchronized page. For example, the standby node device may search the memory to determine whether the memory includes the page address of the to-be-synchronized page. If the memory of the standby node device includes the page address of the to-be-synchronized page, it indicates that the memory stores the original data at the page address of the to-be-synchronized page, and that the standby node device may be querying for data at the page address of the to-be-synchronized page. The original data is read into the memory from the page address of the to-be-synchronized page in the external memory before current data synchronization is performed, and the original data is inconsistent with data stored at the page address of the to-be-synchronized page in the node device in the primary cluster. Therefore, the original data cannot be suitable for being output as a query result.

To ensure correctness of found data and enable new data obtained after data synchronization to take effect in a timely manner, the standby node device may delete the original data that is at the page address of the to-be-synchronized page and that is in the memory, and re-read the data at the page address of the to-be-synchronized page in the external memory into the memory of the standby node device. This process may be referred to as page swapping. Because data stored in the external memory of the standby node device is consistent with the data stored at the page address of the to-be-synchronized page in the node device in the primary cluster, a user can find, through page swapping, the new data obtained after data synchronization, so that the new data takes effect in a timely manner after data synchronization.

In some embodiments, the disaster recovery cluster may provide a data query function for the user. Due to an access delay of the disaster recovery cluster or another reason, some data query operations may require long time. A data query operation with long time may be referred to as a long query. In an optional embodiment, to ensure that a long query in the disaster recovery cluster can be properly executed, if any node device in the primary cluster receives a data deletion operation, the node device may delete, after waiting for specified duration, data that the data deletion operation indicates to delete. Specified duration corresponding to different node devices may be the same or may be different. The specified duration may be set according to an actual requirement of the long query in the disaster recovery cluster. For example, the specified duration may be 30 minutes, or may be one hour or several hours. For example, if most long queries in the disaster recovery cluster may be completed within two hours, the specified duration may be set to 2 hours. The node device performs the data deletion operation after waiting for the specified duration, so that it can be ensured that the long query in the disaster recovery cluster can be properly performed.

For example, it is assumed that the standby node device in the disaster recovery cluster receives a data query operation initiated by the user, the data query operation is performed for querying for data A. The data A may be very long data or a data set including a large amount of data. After 5 minutes, the node device in the primary cluster receives a data deletion operation, and the data deletion operation indicates to delete the data A or a part of the data A. In this case, the data query operation on the data A in the disaster recovery cluster may not have been completed yet, and still requires long time to complete. If the node device immediately performs the data deletion operation, and performs data synchronization between the primary cluster and the disaster recovery cluster after one minute, the standby node device in the disaster recovery cluster also deletes the data A or a part of the data A. In this case, the data query operation on the data A in the disaster recovery cluster cannot be properly performed, and an access failure is caused. In this embodiment of this application, it is assumed that the specified duration is two hours. After receiving the data deletion operation on the data A, the node device in the primary cluster waits for two hours, and then performs the operation of deleting the data A. In this way, even after the node device deletes the data A, data synchronization is immediately performed between the primary cluster and the disaster recovery cluster. When the standby node device in the disaster recovery cluster deletes the data A, 125 minutes have elapsed since a moment at which the data query operation on the data A is received. In this case, a long query for the data A has been completed. Therefore, a specified duration for waiting for data cleanup is set, so that it can be ensured that data that is being accessed in the disaster recovery cluster is not cleaned up, and it is ensured that the long query in the disaster recovery cluster can be properly executed.

In an optional embodiment, each time data synchronization is performed, in addition to sending the page address and the data of the to-be-synchronized page to the standby node device, the node device may further send, to the standby node device, a global consistency snapshot (snapshot) and a control file that are generated when data synchronization is performed. For example, each time data synchronization is performed, the node device in the primary cluster creates a global consistency point, and generates a global consistency point snapshot. The global consistency point may be understood as a time point at which data synchronization is performed between the primary cluster and the disaster recovery cluster, to implement global consistency. The global consistency point snapshot may be understood as a moment at which the global consistency point is created. In other words, the global consistency point snapshot may be understood as a copy or an image that are of data stored in the node device and a log of an executed operation transaction when data synchronization is performed. The operation transaction refers to a task executed by the node device for each service operation.

Any data synchronization is used as an example. A global consistency snapshot generated in current data synchronization may include a minimum transaction number and a log sequence number (log sequence number, LSN) of a latest log on the node device. The minimum transaction number is a transaction number of an operation transaction that is first executed among operation transactions that are being executed by the primary cluster during current data synchronization. Therefore, the minimum transaction number may also be referred to as an oldest transaction number (oldestXmin). When each operation transaction starts to be executed, a transaction number (Xmin) is obtained. The transaction number is unique in the data disaster recovery system, and is used to identify a moment at which the operation transaction starts to be executed. Therefore, a size of a transaction number in the data disaster recovery system monotonically increases with time. For example, if a moment at which an operation transaction a starts to be executed is earlier than a moment at which an operation transaction b starts to be executed, a transaction number of the operation transaction a is less than a transaction number of the operation transaction b.

The node device generates a log for each executed operation transaction. The log is used to record description information of the corresponding operation transaction. Each log includes a log sequence number. The log sequence number is unique in the data disaster recovery system, and is used to identify a time sequence of generating the log. Similar to that of the transaction number, a size of a log sequence number in the data disaster recovery system also monotonically increases with time.

The node device adds the minimum transaction number in the generated global consistency snapshot and the log sequence number of the latest log on the node device to the control file, and sends the generated global consistency snapshot and the control file to the standby node device. The standby node device receives and stores the global consistency snapshot and the control file that are sent by the node device.

In some embodiments, the global consistency snapshot may further include a transaction commit number (commit sequence number, CSN), and the transaction commit number is a transaction commit number of a last committed operation transaction in the primary cluster during current data synchronization. When each operation transaction is committed, a transaction commit number is obtained. The transaction commit number is unique in the data disaster recovery system, and is used to identify a commit sequence of each transaction. A size of the transaction commit number in the data disaster recovery system also monotonically increases with time.

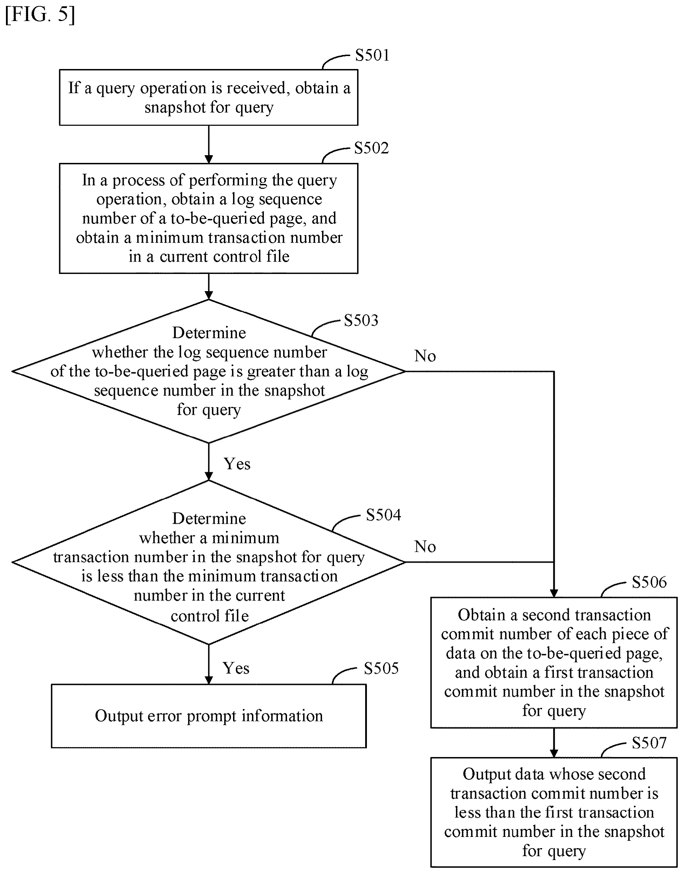

When any standby node device in the disaster recovery cluster performs data query, to ensure that correct data is found, a query process may be performed in a manner shown in FIG. 5. The process may include the following steps.

S501: If a query operation is received, obtain a snapshot for query.

When receiving the query operation, the standby node device obtains a snapshot for query received in a latest data synchronization process. In other words, the snapshot for query is a global consistency snapshot received in the last data synchronization process before a moment at which the query operation is received.

The standby node device performs the query operation based on the snapshot for query. For example, when querying a page K, the standby node device determines, based on the obtained snapshot for query, which data is visible and which data is invisible in a plurality of pieces of data included in the page K.

S502: In a process of performing the query operation, obtain a log sequence number of a to-be-queried page, and obtain a minimum transaction number in a current control file.

The log sequence number of the to-be-queried page is a log sequence number of a latest log corresponding to the to-be-queried page. The current control file is a control file received in the last data synchronization process before the current moment at which the query operation is performed on the to-be-queried page.

For example, it is assumed that data synchronization is performed between the primary cluster and the disaster recovery cluster every half an hour, data synchronization is separately performed between the primary cluster and the disaster recovery cluster at 8:00, 8:30, and 9:00. If the standby node device receives the query operation at 8:20, still performs the query operation at 8:40, and finds the page K, in other words, the to-be-queried page is the page K at 8:40, the standby node device obtains the snapshot for query at 8:20. The snapshot for query is a global consistency snapshot received in a last data synchronization process before 8:20, to be specific, the snapshot for query is a global consistency snapshot sent by the node device in the primary cluster to the standby node device at 8:00. At 8:40, the standby node device obtains a current control file, where the current control file is a control file received in a last data synchronization process before 8:40, to be specific, the current control file is a control file sent by the node device in the primary cluster to the standby node device at 8:30.

S503: Determine whether the log sequence number of the to-be-queried page is greater than a log sequence number in the snapshot for query; if yes, perform step S504; and if no, perform step S506.

S504: Determine whether a minimum transaction number in the snapshot for query is less than the minimum transaction number in the current control file; if yes, perform step S505; and if no, perform step S506.

S505: Output error prompt information.

If the log sequence number of the to-be-queried page is greater than the log sequence number in the snapshot for query, it indicates that the to-be-queried page has been modified after the data synchronization corresponding to the snapshot for query. If the minimum transaction number in the snapshot for query is less than the minimum transaction number in the current control file, it indicates that after receiving the snapshot for query, the standby node device performs data synchronization for a second time, receives a new control file and a new global consistency snapshot, and may determine that the to-be-queried page is modified during the second-time data synchronization. In this case, the standby node device performs the query operation based on the snapshot for query, and determines visibility of each piece of data, which causes a query error. Therefore, the standby node device stops performing the query operation, and outputs the error prompt information.

If the log sequence number of the to-be-queried page is less than or equal to the log sequence number in the snapshot for query, it indicates that after the data synchronization corresponding to the snapshot for query, data modification is not performed on the to-be-queried page. In this case, regardless of whether the standby node device performs data synchronization for the second time after receiving the snapshot for query, the to-be-queried page is not affected. Therefore, a size relationship between the minimum transaction number in the snapshot for query and the minimum transaction number in the current control file does not need to be determined, and the query operation may continue to be performed.

If the minimum transaction number in the snapshot for query is not less than the minimum transaction number in the current control file, it indicates that after receiving the snapshot for query, the standby node device does not perform new data synchronization, and does not receive a new control file or a new global consistency snapshot. For example, if the minimum transaction number in the snapshot for query is equal to the minimum transaction number in the current control file, it indicates that the snapshot for query and the current control file are a global consistency snapshot and a control file that are received by the standby node device in a same data synchronization process. After receiving the snapshot for query, the standby node device does not perform new data synchronization. Therefore, the to-be-queried page is not modified at a current moment due to new data synchronization. Therefore, regardless of whether the log sequence number of the to-be-queried page is greater than the log sequence number in the snapshot for query, the query operation can continue to be performed.

S506: Obtain a second transaction commit number of each piece of data on the to-be-queried page, and obtain a first transaction commit number in the snapshot for query.

If the log sequence number of the to-be-queried page is less than or equal to the log sequence number in the snapshot for query, or the minimum transaction number in the snapshot for query is not less than the minimum transaction number in the current control file, the standby node device continues to perform the query operation to obtain the second transaction commit number of each piece of data on the to-be-queried page, and obtain the first transaction commit number in the snapshot for query. The first transaction commit number is a transaction commit number of a last committed operation transaction in the primary cluster when the snapshot for query is generated. The second transaction commit number of any piece of data on the to-be-queried page is a transaction commit number of an operation transaction corresponding to the data. The operation transaction corresponding to the data may be a task for modifying the data. The second transaction commit number may be used to identify commit time of the task for modifying the data.

S507: Output data whose second transaction commit number is less than the first transaction commit number in the snapshot for query.

For example, it is assumed that a current to-be-queried page is the page K, the standby node device performs the following operation on each piece of data on the page K:
obtaining a second transaction commit number of the data, and determining whether the second transaction commit number of the data is less than the first transaction commit number in the snapshot for query. When the query operation is performed, the first transaction commit number is used to identify commit time of a last operation transaction in the primary cluster during last data synchronization before the query operation is performed, and the commit time is earlier than start time of the query operation.

If the second transaction commit number of the data is less than the first transaction commit number in the snapshot for query, it indicates that the commit time of the task for modifying the data is earlier than the commit time of the last operation transaction in the primary cluster during the last data synchronization before the query operation is performed. In other words, the commit time of the task for modifying the data is before time at which the query operation starts to be performed. Therefore, the data is visible when the query operation is performed, and the data may be output.

If the second transaction commit number of the data is greater than or equal to the first transaction commit number in the snapshot for query, it indicates that the commit time of the task for modifying the data is later than the commit time of the last operation transaction in the primary cluster during the last data synchronization before the query operation is performed. In other words, the commit time of the task for modifying the data may be after time at which the query operation starts to be performed. Therefore, the data is invisible when the current query operation is performed, and the standby node device does not output the data, to ensure data query consistency between the primary cluster and the disaster recovery cluster.

The minimum transaction number, transaction commit number, and log sequence number are used to ensure data query consistency between the primary cluster and the disaster recovery cluster, so that correctness of data found in the disaster recovery cluster is improved.

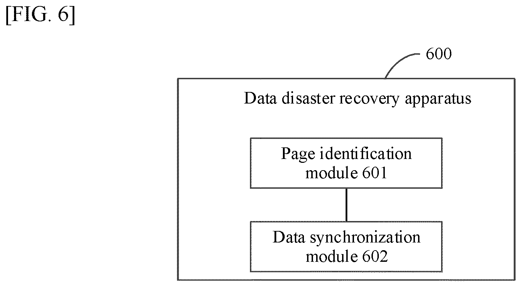

Based on a same inventive concept as the foregoing method embodiments, an embodiment of this application further provides a data disaster recovery apparatus. The apparatus may be used in any node device in a primary cluster of a database disaster recovery system. In some embodiments, as shown in FIG. 6, the data disaster recovery apparatus 600 may include a page identification module 601 and a data synchronization module 602. The data disaster recovery apparatus 600 may be configured to implement functions of the foregoing method embodiments, and therefore can implement beneficial effects of the foregoing method embodiments.

The page identification module 601 may be configured to: in a data synchronization process, determine, based on a page modification information bitmap of the node device, a to-be-synchronized page on which data modification is performed in the node device. The page modification information bitmap indicates a page address of a page on which data modification is performed in the node device. The data synchronization module 602 may be configured to: replicate data of the to-be-synchronized page, and send a page address of the to-be-synchronized page and the data of the to-be-synchronized page to a standby node device corresponding to the node device, where the standby node device is a device in the disaster recovery cluster.

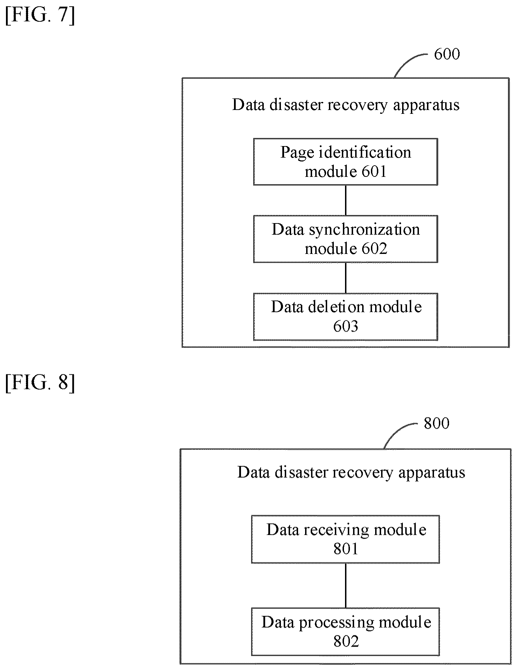

In some embodiments, as shown in FIG. 7, the data disaster recovery apparatus 600 may further include a data deletion module 603. The data deletion module 603 may be configured to: when receiving a data deletion operation, delete, after waiting for specified duration, data that the data deletion operation indicates to delete.

For example, the page identification module 601, the data synchronization module 602, and the data deletion module 603 may be integrated into any node device in the primary cluster 100 in FIG. 1. The page identification module 601, the data synchronization module 602, and the data deletion module 603 may all be implemented by using software, or may be implemented by using hardware. For example, the following uses the page identification module 601 as an example to describe an implementation of the page recognition module. Similarly, for implementations of the data synchronization module 602 and the data deletion module 603, refer to the implementation of the page identification module 601.

As an example of a software function module, the page identification module 601 may include code running on a compute instance. The computing instance may include at least one of a physical host (a node device), a virtual machine, and a container. Further, there may be one or more computing instances. For example, the page identification module 601 may include code running on a plurality of hosts/virtual machines/containers.

As an example of a hardware function module, the page identification module 601 may be implemented via an application-specific integrated circuit (application-specific integrated circuit, ASIC), a device implemented via a programmable logic device (programmable logic device, PLD), or the like. The PLD may be implemented by a complex programmable logical device (complex programmable logical device, CPLD), a field-programmable gate array (field-programmable gate array, FPGA), generic array logic (generic array logic, GAL), or any combination thereof.

It should be noted that, in another embodiment, the page identification module 601 may be configured to perform any step in the data disaster recovery method, the data synchronization module 602 may be configured to perform any step in a data reading method, and the data deletion module 603 may be configured to perform any step in the data reading method. Steps implemented by the page identification module 601, the data synchronization module 602, and the data deletion module 603 may be specified as required. The page identification module 601, the data synchronization module 602, and the data deletion module 603 respectively implement different steps in the data disaster recovery method to implement all functions of the data disaster recovery apparatus.

Based on a same inventive concept as the foregoing method embodiments, an embodiment of this application further provides a data disaster recovery apparatus. The apparatus may be used in any standby node device in a disaster recovery cluster of a database disaster recovery system. In some embodiments, as shown in FIG. 8, the data disaster recovery apparatus 800 may include a data receiving module 801 and a data processing module 802. The data disaster recovery apparatus 800 may be configured to implement functions of the foregoing method embodiments, and therefore can implement beneficial effects of the foregoing method embodiments.

The data receiving module 801 may be configured to receive, in a data synchronization process, a page address of a to-be-synchronized page and data of the to-be-synchronized page that are sent by a node device corresponding to the standby node device, where the node device is a device in the primary cluster; and the to-be-synchronized page is a page on which data modification is performed and that is determined based on a page modification information bitmap of the node device. The data processing module 802 may be configured to store the data of the to-be-synchronized page into an external memory of the standby node device based on the page address of the to-be-synchronized page.

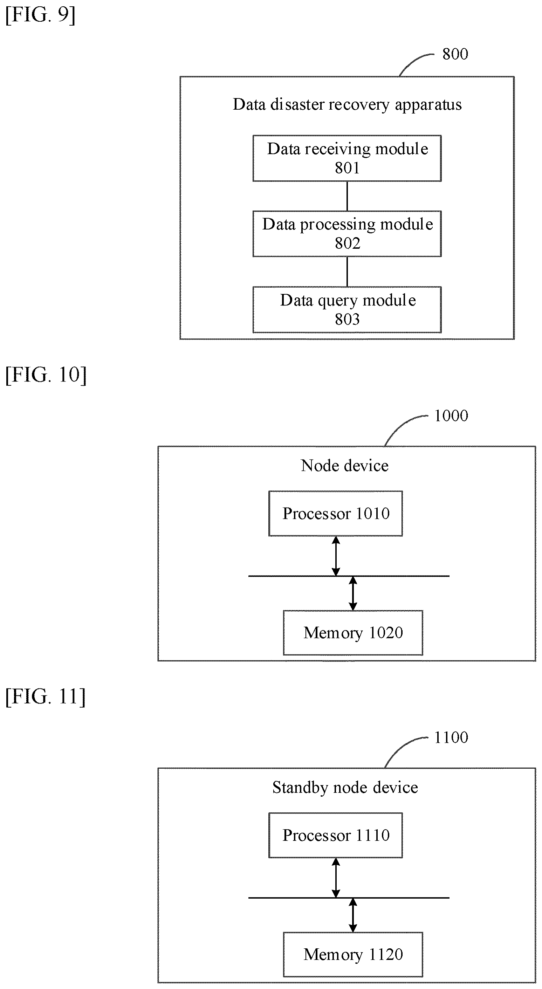

In some embodiments, as shown in FIG. 9, the data disaster recovery apparatus 800 may further include a data query module 803. The data query module 803 may be configured to: when a query operation is received, obtain a snapshot for query, where the snapshot for query is a global consistency snapshot received in a last data synchronization process before a moment at which the query operation is received; obtain, in a query operation process, a log sequence number of the to-be-queried page; and obtain a minimum transaction number in a current control file. The current control file is a control file received in a last data synchronization process before a current moment. If the log sequence number of the to-be-queried page is greater than a log sequence number in the snapshot for query, and a minimum transaction number in the snapshot for query is less than the minimum transaction number in the current control file, error prompt information is output.

For example, the data receiving module 801, the data processing module 802, and the data query module 803 may be integrated into any standby node device in the disaster recovery cluster 200 shown in FIG. 1. The data receiving module 801, the data processing module 802, and the data query module 803 may all be implemented by using software, or may be implemented by using hardware. For example, the following uses the data receiving module 801 as an example to describe an implementation of the data receiving module. Similarly, for implementations of the data processing module 802 and the data query module 803, refer to the implementation of the data receiving module.

As an example of a software function module, the data receiving module 801 may include code running on a compute instance. The computing instance may include at least one of a physical host (a node device), a virtual machine, and a container. Further, there may be one or more computing instances. For example, the data receiving module 801 may include code running on a plurality of hosts/virtual machines/containers.

As an example of a hardware function module, the data receiving module 801 may be a device implemented via an ASIC or a PLD, or the like. The PLD may be implemented by a CPLD, an FPGA, GAL, or any combination thereof.

It should be noted that, in another embodiment, the data receiving module 801 may be configured to perform any step in the data disaster recovery method, the data processing module 802 may be configured to perform any step in the data disaster recovery method, and the data query module 803 may be configured to perform any step in the data disaster recovery method. Steps implemented by the data receiving module 801, the data processing module 802, and the data query module 803 may be specified as required. The data receiving module 801, the data processing module 802, and the data query module 803 respectively implement different steps in the data disaster recovery method to implement all functions of the data disaster recovery apparatus.

Functional modules in embodiments of this application may be integrated into one processor, or each of the modules may exist alone physically, or two or more modules are integrated into one module. The integrated module may be implemented in a form of hardware, or may be implemented in a form of software functional module.

When the integrated module is implemented in the form of software functional module and sold or used as an independent product, the integrated module may be stored in a computer-readable storage medium. Based on such an understanding, the technical solutions of this application essentially, or the part contributing to a conventional technology, or all or some of the technical solutions may be implemented in form of software product. The computer software product is stored in a storage medium and includes several instructions for instructing a computer device (which may be a personal computer, a server, a network device) or a processor (processor) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

Based on a same inventive concept as the foregoing method embodiments, an embodiment of this application further provides a node device. The node device may be a physical machine, or may be a server or a computing device. The node device may be configured to implement functions performed by the node device in the foregoing method embodiments, and therefore can implement beneficial effects of the foregoing method embodiments.

In some embodiments, the node device is any node device in the primary cluster 100 in the database disaster recovery system shown in FIG. 1. A structure of the node device 1000 may be shown in FIG. 10, and includes a processor 1010 and a memory 1020 connected to the processor 1010. The processor 1010 and the memory 1020 may be connected to each other through a bus. The processor 1010 may be used as a main processor of the node device 1000, namely, a control core of the node device 1000. The bus may be a peripheral component interconnect (peripheral component interconnect, PCI) bus, an extended industry standard architecture (extended industry standard architecture, EISA) bus, or the like. Buses may be classified into an address bus, a data bus, a control bus, and the like. A specific connection medium between the processor 1010 and the memory 1020 is not limited in embodiments of this application.

The memory 1020 may be a volatile memory, for example, a random access memory. Alternatively, the memory may be a non-volatile memory, for example, a read-only memory, a flash memory, a hard disk drive (hard disk drive, HDD), or a solid-state drive (solid-state drive, SSD). Alternatively, the memory 1020 is any other medium that can be used to carry or store expected program code in a form of instruction or data structure and that can be accessed by a computer, but is not limited thereto. The memory 1020 may be a combination of the foregoing memories. The memory 1020 may be configured to store a software program and a module.

The processor 1010 may include one or more processors. The processor 1010 runs a software program and a module that are stored in the memory 1020, to perform various functional applications and data processing of the node device 1000, for example, the data disaster recovery method provided in embodiments of this application.

In some embodiments, the node device 1000 may further include a communication module. The communication module is connected to the processor 1010 and the memory 1020 through a bus. The communication module may be configured to communicate with a standby node device in the disaster recovery cluster and a terminal device of a user through a network.

For example, when the node device 1000 is configured to implement the functions performed by the node device in the foregoing method embodiments, the processor 1010 may be configured to determine, in a data synchronization process based on a page modification information bitmap of the node device, a to-be-synchronized page on which data modification is performed in the node device. The page modification information bitmap indicates a page address of a page on which data modification is performed in the node device. The data of the to-be-synchronized page is replicated, and the page address of the to-be-synchronized page and the data of the to-be-synchronized page are sent to a standby node device corresponding to the node device via the communications module. The standby node device is a device in the disaster recovery cluster.

It can be understood that, a structure shown in this embodiment of this application does not constitute a specific limitation on the node device. In some other embodiments of this application, the node device may include more or fewer components than those shown in the figure, or some components may be combined, or some components may be divided, or different component arrangements may be used. The components shown in the figure may be implemented by hardware, software, or a combination of software and hardware.

An embodiment of this application further provides a primary cluster. The primary cluster may be the primary cluster 100 shown in FIG. 1. The primary cluster may include at least one node device. Each node device may use a structure shown in FIG. 10, and includes a processor and a memory. The processor of each node device is configured to execute instructions stored in the memory of the node device, so that the node device implements functions performed by the node device in the foregoing method embodiments.

Based on a same technical concept as the foregoing method embodiments, an embodiment of this application further provides a standby node device. The standby node device may be a physical machine, or may be a server or a computing device. The standby node device may be configured to implement functions performed by the standby node device in the foregoing method embodiments, and therefore can implement beneficial effects of the foregoing method embodiments.

In some embodiments, the standby node device may be any standby node device in the disaster recovery cluster 200 in the database disaster recovery system shown in FIG. 1. A structure of the standby node device 1100 may be shown in FIG. 11, and includes a processor 1110 and a memory 1120 connected to the processor 1110. The processor 1110 and the memory 1120 may be connected to each other through a bus. The processor 1110 may be used as a main processor of the standby node device 1100, namely, a control core of the standby node device 1100. The bus may be a peripheral component interconnect (peripheral component interconnect, PCI) bus, an extended industry standard architecture (extended industry standard architecture, EISA) bus, or the like. Buses may be classified into an address bus, a data bus, a control bus, and the like. A specific connection medium between the processor 1110 and the memory 1120 is not limited in embodiments of this application.

The memory 1120 may be a volatile memory, for example, a random access memory. The random access memory may be used as a memory of the standby node device 1100. Alternatively, the memory 1120 may be a non-volatile memory, for example, a read-only memory, a flash memory, a hard disk drive (hard disk drive, HDD), or a solid-state drive (solid-state drive, SSD). The non-volatile memory may be used as an external memory of the standby node device 1100, or the memory 1120 is any other medium that can be used to carry or store expected program code in a form of instruction or data structure and that can be accessed by a computer, but is not limited thereto. The memory 1120 may be a combination of the foregoing memories. The memory 1120 may be configured to store a software program and a module.

The processor 1110 may include one or more processors. The processor 1110 runs a software program and a module that are stored in the memory 1120, to perform various functional applications and data processing of the standby node device 1100, for example, the data disaster recovery method provided in embodiments of this application.

In some embodiments, the standby node device 1100 may further include a communication module. The communication module is connected to the processor 1110 and the memory 1120 through a bus. The communication module may be configured to communicate with a node device in the primary cluster and a terminal device of a user through a network.

For example, when the standby node device 1100 is configured to implement the functions performed by the standby node device in the foregoing method embodiments, the communication module may be configured to receive, in a data synchronization process, a page address of a to-be-synchronized page and data of the to-be-synchronized page that are sent by a node device corresponding to the standby node device. The node device is a device in the primary cluster. The to-be-synchronized page is a page on which data modification is performed and that is determined based on a page modification information bitmap of the node device. The processor 1110 may be configured to store the data of the to-be-synchronized page into an external memory of the standby node device based on the page address of the to-be-synchronized page.

It may be understood that the structure shown in this embodiment of this application does not constitute a specific limitation on the computing device. In some other embodiments of this application, the computing device may include more or fewer components than those shown in the figure, or some components may be combined, or some components may be divided, or different component arrangements may be used. The components shown in the figure may be implemented by hardware, software, or a combination of software and hardware.

An embodiment of this application further provides a disaster recovery cluster. The disaster recovery cluster may be the disaster recovery cluster 200 shown in FIG. 1. The disaster recovery cluster may include at least one standby node device. Each standby node device may use a structure shown in FIG. 11, and includes a processor and a memory. The processor of each standby node device is configured to execute the instructions stored in the memory of the standby node device, so that the standby node device implements the functions performed by the standby node device in the foregoing method embodiments.

An embodiment of this application further provides a database disaster recovery system. As shown in FIG. 1, the database disaster recovery system may include a primary cluster 100 and a disaster recovery cluster 200. The primary cluster 100 includes a plurality of node devices, the disaster recovery cluster 200 includes a plurality of standby node devices, and each node device in the primary cluster 100 has a corresponding standby node device in the disaster recovery cluster 200. The node device may use a structure shown in FIG. 10, and includes a processor and a memory. A structure of the standby node device may be shown in FIG. 11. Details are not described herein again.

The method steps in embodiments of this application may be implemented by hardware, or may be implemented by the processor by executing a computer program or instructions. The computer program or the instructions may constitute a computer program product.

An embodiment of this application further provides a computer program product, including computer-executable instructions. In an embodiment, the computer-executable instructions are used to enable a computer to perform a function of the node device or the standby node device in the foregoing method embodiments.

The computer-executable instructions may be stored in a computer-readable storage medium. An embodiment of this application further provides a computer-readable storage medium. The computer-readable storage medium stores executable instructions. In an embodiment, the computer-executable instructions are used to enable a computer to perform a function of the node device or the standby node device in the foregoing method embodiments.

The computer-readable storage medium provided in this embodiment of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of computer-readable storage medium well-known in the art.

The computer-executable instructions may be stored in the computer-readable storage medium, or may be transmitted from a computer-readable storage medium to another computer-readable storage medium. For example, a computer program or instructions may be transmitted from a website, computer, server, or data center to another website, computer, server, or data center in a wired or wireless manner. The computer-readable storage medium may be any usable medium that can be accessed by the computer, or a computing device, for example, a server or a data center, integrating one or more usable media. The usable medium may be a magnetic medium, for example, a floppy disk, a hard disk, or a magnetic tape, or may be an optical medium, for example, a digital video disc (digital video disc, DVD), or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. In addition, the terms "include", "have", and any variant thereof are intended to cover non-exclusive inclusion, for example, include a series of steps or modules. Methods, systems, products, or devices are not necessarily limited to those steps or modules that are expressly listed, but may include other steps or modules that are not expressly listed or that are inherent to such processes, methods, products, or devices.

Although this application is described with reference to specific features and embodiments thereof, it is clear that various modifications and combinations may be made to them without departing from the spirit and scope of this application. Correspondingly, this specification and the accompanying drawings are merely example descriptions of solutions defined by the appended claims, and are considered as any or all of modifications, variations, combinations, or equivalents that fall within the scope of this application.

It is clear that a person skilled in the art can make various modifications and variations to this application without departing from the scope of this application. In this case, this application is intended to cover these modifications and variations of the embodiments of this application provided that they fall within the scope of protection defined by the following claims and their equivalent technologies.

## Claims

1. A data disaster recovery method, applied to a database disaster recovery system, wherein the database disaster recovery system comprises a primary cluster and a disaster recovery cluster; and the method comprises:
in a data synchronization process, determining, by a node device in the primary cluster based on a page modification information bitmap of the node device, a to-be-synchronized page on which data modification is performed in the node device, wherein the page modification information bitmap indicates a page address of a page on which data modification is performed in the node device;
replicating, by the node device, data of the to-be-synchronized page, and sending a page address of the to-be-synchronized page and the data of the to-be-synchronized page to a standby node device corresponding to the node device, wherein the standby node device is a device in the disaster recovery cluster; and
storing, by the standby node device, the data of the to-be-synchronized page into an external memory of the standby node device based on the page address of the to-be-synchronized page.

2. The method according to claim 1, wherein the page modification information bitmap comprises a plurality of indication bits, and each indication bit corresponds to one page that stores data; and the method further comprises:
receiving, by the node device, a data write operation, and determining a target page corresponding to the data write operation; and
setting, by the node device in the page modification information bitmap, an indication bit corresponding to the target page to a page modified state.

3. The method according to claim 1 or 2, wherein the method further comprises:
receiving, by the node device, a data deletion operation, and deleting, after waiting for specified duration, data that the data deletion operation indicates to delete.

4. The method according to any one of claims 1 to 3, wherein after the storing, by the standby node device, the data of the to-be-synchronized page into the external memory of the standby node device, the method further comprises:
when determining that original data at the page address of the to-be-synchronized page is stored in a memory of the standby node device, deleting, by the standby node device, the original data that is at the page address of the to-be-synchronized page and that is in the memory, wherein the original data is read into the memory from the page address of the to-be-synchronized page in the external memory before current data synchronization is performed; and
re-reading, by the standby node device, the data at the page address of the to-be-synchronized page in the external memory into the memory of the standby node device.

5. The method according to any one of claims 1 to 4, wherein the method further comprises:
generating, by the node device, a global consistency snapshot in the data synchronization process, wherein the global consistency snapshot comprises a minimum transaction number and a log sequence number of a latest log on the node device, and the minimum transaction number is a transaction number of an operation transaction that is first executed among operation transactions that are being executed by the primary cluster during the current data synchronization;
adding, by the node device, the minimum transaction number and the log sequence number of the latest log on the node device to a control file, and sending the global consistency snapshot and the control file to the standby node device; and
performing, by the standby node device, a query operation based on the global consistency snapshot and the control file that are received in the data synchronization process.

6. The method according to claim 5, wherein the performing, by the standby node device, the query operation based on the global consistency snapshot and the control file that are received in the data synchronization process comprises:
obtaining, by the standby node device, a snapshot for query when receiving the query operation, wherein the snapshot for query is a global consistency snapshot received in a last data synchronization process before a moment at which the query operation is received;
in a process of performing the query operation, obtaining, by the standby node device, a log sequence number of a to-be-queried page and a minimum transaction number in a current control file, wherein the log sequence number of the to-be-queried page is a log sequence number of a latest log corresponding to the to-be-queried page, and the current control file is a control file received in a last data synchronization process before a current moment; and
outputting error prompt information if the standby node device determines that the log sequence number of the to-be-queried page is greater than a log sequence number in the snapshot for query, and a minimum transaction number in the snapshot for query is less than the minimum transaction number in the current control file.

7. The method according to claim 6, wherein the global consistency snapshot further comprises a first transaction commit number, the first transaction commit number is a transaction commit number of a last committed operation transaction in the primary cluster during the current data synchronization, and the to-be-queried page stores at least one piece of data; and the method further comprises:
if the standby node device determines that the log sequence number of the to-be-queried page is less than or equal to the log sequence number in the snapshot for query, or the minimum transaction number in the snapshot for query is greater than or equal to the minimum transaction number in the current control file, obtaining a second transaction commit number of each piece of data on the to-be-queried page and the first transaction commit number in the snapshot for query, wherein a second transaction commit number of any piece of data is a transaction commit number of an operation transaction corresponding to the any piece of data; and
outputting data whose second transaction commit number is less than the first transaction commit number in the snapshot for query.

8. A data disaster recovery method, applied to any node device in a primary cluster, wherein the primary cluster is located in a database disaster recovery system, and the database disaster recovery system comprises the primary cluster and a disaster recovery cluster; and the method comprises:
in a data synchronization process, determining, based on a page modification information bitmap of the node device, a to-be-synchronized page on which data modification is performed in the node device, wherein the page modification information bitmap indicates a page address of a page on which data modification is performed in the node device;
replicating data of the to-be-synchronized page; and
sending a page address of the to-be-synchronized page and the data of the to-be-synchronized page to a standby node device corresponding to the node device, wherein the standby node device is a device in the disaster recovery cluster.

9. The method according to claim 8, wherein the page modification information bitmap comprises a plurality of indication bits, and each indication bit corresponds to one page that stores data; and the method further comprises:
if a data write operation is received, determining a target page corresponding to the data write operation; and
setting, in the page modification information bitmap, an indication bit corresponding to the target page to a page modified state.

10. The method according to claim 8 or 9, wherein the method further comprises:
if a data deletion operation is received, deleting, after waiting for specified duration, data that the data deletion operation indicates to delete.

11. A data disaster recovery method, applied to any standby node device in a disaster recovery cluster, wherein the disaster recovery cluster is located in a database disaster recovery system, and the database disaster recovery system comprises a primary cluster and the disaster recovery cluster; and the method comprises:
receiving, in a data synchronization process, a page address of a to-be-synchronized page and data of the to-be-synchronized page that are sent by a node device corresponding to the standby node device, wherein the node device is a device in the primary cluster; and the to-be-synchronized page is a page on which data modification is performed and that is determined based on a page modification information bitmap of the node device; and
storing the data of the to-be-synchronized page into an external memory of the standby node device based on the page address of the to-be-synchronized page.

12. The method according to claim 11, wherein after the storing the data of the to-be-synchronized page into the external memory of the standby node device based on the page address of the to-be-synchronized page, the method further comprises:
if it is determined that original data at the page address of the to-be-synchronized page is stored in a memory of the standby node device, deleting the original data at the page address of the to-be-synchronized page in the memory, wherein the original data is read into the memory from the page address of the to-be-synchronized page in the external memory before current data synchronization is performed; and
re-reading the data at the page address of the to-be-synchronized page in the external memory into the memory of the standby node device.

13. A data disaster recovery apparatus, used in any node device in a primary cluster, wherein the primary cluster is located in a database disaster recovery system, and the database disaster recovery system comprises the primary cluster and a disaster recovery cluster; and the apparatus comprises:
a page identification module, configured to: in a data synchronization process, determine, based on a page modification information bitmap of the node device, a to-be-synchronized page on which data modification is performed in the node device, wherein the page modification information bitmap indicates a page address of a page on which data modification is performed in the node device; and
a data synchronization module, configured to: replicate data of the to-be-synchronized page, and send a page address of the to-be-synchronized page and the data of the to-be-synchronized page to a standby node device corresponding to the node device, wherein the standby node device is a device in the disaster recovery cluster.

14. The apparatus according to claim 13, wherein the page modification information bitmap comprises a plurality of indication bits, and each indication bit corresponds to one page that stores data; and the page identification module is further configured to:
if a data write operation is received, determine a target page corresponding to the data write operation; and
set, in the page modification information bitmap, an indication bit corresponding to the target page to a page modified state.

15. The apparatus according to claim 13 or 14, wherein the apparatus further comprises:
a data deletion module, configured to: when a data deletion operation is received, delete, after waiting for specified duration, data that the data deletion operation indicates to delete.

16. A data disaster recovery apparatus, used in any standby node device in a disaster recovery cluster, wherein the disaster recovery cluster is located in a database disaster recovery system, and the database disaster recovery system comprises a primary cluster and the disaster recovery cluster; and the apparatus comprises:
a data receiving module, configured to receive, in a data synchronization process, a page address of a to-be-synchronized page and data of the to-be-synchronized page that are sent by a node device corresponding to the standby node device, wherein the node device is a device in the primary cluster, and the to-be-synchronized page is a page on which data modification is performed and that is determined based on a page modification information bitmap of the node device; and
a data processing module, configured to store the data of the to-be-synchronized page into an external memory of the standby node device based on the page address of the to-be-synchronized page.

17. The apparatus according to claim 16, wherein the data processing module is further configured to:
if it is determined that original data at the page address of the to-be-synchronized page is stored in a memory of the standby node device, delete the original data that is at the page address of the to-be-synchronized page and that is in the memory, wherein the original data is read into the memory from the page address of the to-be-synchronized page in the external memory before current data synchronization is performed; and
re-read the data at the page address of the to-be-synchronized page in the external memory into the memory of the standby node device.

18. A node device, comprising a memory and a processor, wherein the memory stores a computer program, and the processor is configured to execute the computer program stored in the memory, to implement the method according to any one of claims 8 to 10.

19. A standby node device, comprising a memory and a processor, wherein the memory stores a computer program, and the processor is configured to execute the computer program stored in the memory, to implement the method according to claim 11 or 12.

20. A primary cluster, wherein the primary cluster comprises at least one node device according to claim 18.

21. A disaster recovery cluster, wherein the disaster recovery cluster comprises at least one standby node device according to claim 19.

22. A database disaster recovery system, comprising the primary cluster according to claim 20 and the disaster recovery cluster according to claim 21.

23. A computer-readable storage medium, storing computer-executable instructions, wherein the computer-executable instructions are used to enable a computer to perform the method according to any one of claims 8 to 10 or the method according to claim 11 or 12.

24. A computer program product, comprising computer-executable instructions, wherein the computer-executable instructions are used to enable a computer to perform the method according to any one of claims 8 to 10 or the method according to claim 11 or 12.
